## Europäisches Patentamt
## European Patent Office
## Office européen des brevets

(19)

(11) Veröffentlichungsnummer: **0 122 435**
**B1**

(12) **EUROPÄISCHE PATENTSCHRIFT**

(45) Veröffentlichungstag der Patentschrift:
22.07.87

(21) Anmeldenummer: **84102481.3**

(22) Anmeldetag: **08.03.84**

(51) Int. Cl.⁴: **B 60 C 15/06**

(54) **Fahrzeugluftreifen.**

(30) Priorität: **16.04.83 DE 3313854**

(43) Veröffentlichungstag der Anmeldung:
**24.10.84 Patentblatt 84/43**

(45) Bekanntmachung des Hinweises auf die Patenterteilung:
**22.07.87 Patentblatt 87/30**

(84) Benannte Vertragsstaaten:
**AT BE CH DE FR GB IT LI LU NL SE**

(56) Entgegenhaltungen:
**CH-A-268 357**
**DE-A-1 480 951**
**DE-A-2 227 717**
**DE-A-2 513 782**
**FR-A-2 368 377**
**US-A-3 853 163**

(73) Patentinhaber: **Continental Gummi- Werke
Aktiengesellschaft, Königsworther Platz 1, D-3000
Hannover 1 (DE)**

(72) Erfinder: **Funk, Heinrich, Dipl.- Ing.,
Pestalozzistrasse 8, D-3559 Burgwald 2 (DE)**
Erfinder: **Pakur, Henryk, Brandenburger- Strasse 7,
D-3062 Bückeburg (DE)**
Erfinder: **Seitz, Hans, Dr. Dipl.- Ing., Grafenberger-
Strasse 5 B, D-3012 Langenhagen (DE)**

EP 0 122 435 B1

LIBER, STOCKHOLM 1987

## Beschreibung

Die Erfindung betrifft einen Fahrzeugluftreifen mit einem zugfesten Gürtel und einer Radialkarkasse, deren Festigkeitsträger durch Umschlingen der Reifenkerne in den Reifenwülsten verankert sind, wobei sich seitlich außen im Wulstbereich nach oben geführte Endabschnitte der Karkaßlagen befinden und weiterhin Wulstverstärker aus in Cordlage angeordneten Fäden oder dergl. vorgesehen sind, die Festigkeitsträger der Endabschnitte kreutzen und schräg in bezug auf die durch die Reifenachse bestimmten Radialebenen verlaufen und im Bereich ihrer raidial äußeren Enden im Vergleich zu ihren Abschnitten im Wulstkernbereich mit der Reifenumfangsrichtung kleinere Winkel bilden. Ein derartiger Reifen ist z.B. durch die US-A- 3 853 163 bekannt.

Bei Fahrzeugluftreifen mit einer Radialkarkasse ist es üblich, die Karkaßfäden so zu verlegen, daß sowohl deren von Wulst zu Wulst geführten durchgehenden Abschnitte als auch die seitlich außen im Wulstbereich gelegenen nach oben geführten Endabschnitte der Karkaßlagen bzw. die sie bildenden Fäden oder dergl. in Radialstellung anzuordnen sind. Es ist weiterhin bekannt, Wulstverstärker aus in Cordlage angeordneten Fäden oder dergl. so zu verlegen, daß die Fäden des Wulstverstärkers miteinander einen Kreuzverband und gegebenenfalls auch mit den Verstärkungseinlagen der Karkasse einen Dreiecksverband bilden. Weiterhin ist es auch bekannt, die im Bereich der Reifenwülste befindlichen Karkaßeinlagen so zu verlegen, daß die Karkaßfäden in diesem Bereich zu beiden Seiten der Wulstkerne, also in dem inneren und äußeren Abschnitt Winkel mit der Radialrichtung bilden.

Alle Vorschläge dieser Art laufen darauf hinaus, die Reifenwülste zu verfestigen.

Die Erfindung geht von der Erkenntnis aus, daß in Radialrichtung angeordnete Karkaßfestigkeitsträger im von Wulst zu Wulst geführten Teil und in dem nach oben geführten vorerwähnten Endabschnitt zu einer unerwünschten Versteifung, insbesondere zu einer Verhärtung bei dynamischer Beanspruchung führen können.

Demgemäß liegt der Erfindung im wesentlichen die Aufgabe zugrunde, die Wulstpartien des Reifens so auszubilden, daß sie eine vergleichsweise große dynamische Weichheit haben, daß sie aber dennoch steif genug sind, um die bei Schräg- und Querkräften wirksamen Belastungen im Wulstbereich ausreichend sicher aufzunehmen. Außerdem wird ein festigkeitsmäßig günstiger, harmonischer Übergang zwischen den verstärkten Wulstbereichen und den darüber befindlichen hochflexiblen Seitenwänden angestrebt.

Diese Aufgabe wird mit den Merkmalen des Anspruchs 1 gelöst. Dabei sind erfindungsgemäß die Fäden der Wulstverstärker einerseits und die Festigkeitsträger der Karkaßendabschnitte andererseits entgegengesetzt schrägverlaufend angeordnet. Zudem schließen diese Fäden und diese Festigkeitsträger im Bereich ihrer äußeren Enden im Vergleich zu ihren im Bereich der Wulstkerne gelegenen Abschnitten mit der Reifenumfangsrichtung einen kleineren Winkel ein.

Wichtig ist somit, daß beim Vorhandensein einer Radialkarkasse die seitlich angeordneten Karkaßendabschnitte nicht radial, sondern schräg verlaufen und außerdem noch mit den zugehörigen Wulstverstärkern bzw. den sie bildenden Fäden Winkel bilden, und zwar derart, daß diese Festigkeitsträger unterschiedliche Schrägrichtungen in bezug auf die Radialrichtung des Reifens einnehmen. Außerdem verändern sich die Winkel aller Fäden und Festigkeitsträger, indem sich ihre Winkelstellung in bezug auf die Radialrichtung des Reifens verändert, und zwar in der Weise, daß am äußeren Rand der Wulstverstärker bzw. am freien Rand der genannten Endbereiche die Fäden und Festigkeitsträger vergleichsweise kleinere Winkel mit der Reifenumfangsrichtung einschließen.

Somit werden bewußt zu beiden Seiten eines jeden Wulstkernes radial verlaufende und insoweit einander parallele Fäden, Drähte oder dergl. vermieden, während darüber hinaus die Fäden der Wulstverstärker und die Festigkeitsträger der Karkaßendabschnitte umso kleinere Winkel mit der Reifenumfangsrichtung bilden je weiter sie der Reifenschulter zugekehrt sind.

Der vorgenannte Fadenverlauf am oberen Ende der Karkaßendabschnitte und am oberen Ende der die Wulstverstärker bildenden Fäden hat auch den großen Vorteil, daß die Wulstpartien bei großer dynamischer Weichheit in der Lage sind, vergleichsweise große Umfangskräfte, also solche Kräfte aufzunehmen, die z.B. bei Lenkausschlägen entstehen.

Weitere Einzelheiten der Erfindung werden anhand der Zeichnung erläutert, in der ein Ausführungsbeispiel der Erfindung dargestellt ist.

Es zeigen:

Fig. 1 einen radialen Teilschnitt durch einen Fahrzeugluftreifen,

Fig. 2 den Reifen gemäß Fig. 1 in der Teilseitenansicht, und zwar unter Darstellung seiner Verstärkungseinlagen, und

Fig. 3 den schon in Fig. 2 wiedergegebenen Verlauf der Verstärkungseinlagen anhand von Einzelfäden, die in eine Ebene gelegt sind.

Der im wesentlichen aus Gummi oder gummiähnlichen Stoffen bestehende Reifenkörper hat zwischen seinem profilierten Laufstreifen 1 und seiner Karkasse 2 mit radial verlaufenden fadenförmigen Festigkeitsträgern 3 einen sich im wesentlichen über die Breite der Lauffläche erstreckenden, in Umfangsrichtung zugfesten Gürtel 4 bekannter Bauart. Die Festigkeitsträger 3 der Radialkarkasse 2 sind durch Umschlingen der ringförmigen Wulstkerne 5 in den Wülsten 6 verankert. Zu diesem Zweck weist die Radialkarkasse 2 seitlich außen befindliche Endabschnitte 7 auf, die etwa auf einem Drittel der Höhe des Reifenkörpers in den Reifenseitenwänden 8 enden.

Die Wulstkerne 5 sind von einem hart eingestellten, im wesentlichen dreieckförmigen Gummiprofil 9 verschlossen, dessen Breite sich radial nach außen allmählich verringert.

Zwischen dem Gummiprofil 9 und den Endbereichen 7 befindet sich ein Wulstverstärker 10 aus einander parallelen, also in Cordlage angeordneten Fäden 11, so daß demgemäß der Wulstverstärker 10 dem Endbereich 7 benachbart liegt, wobei jedoch der Wulstverstärker 10 den Endbereich 7 radial nach außen geringfügig überragt.

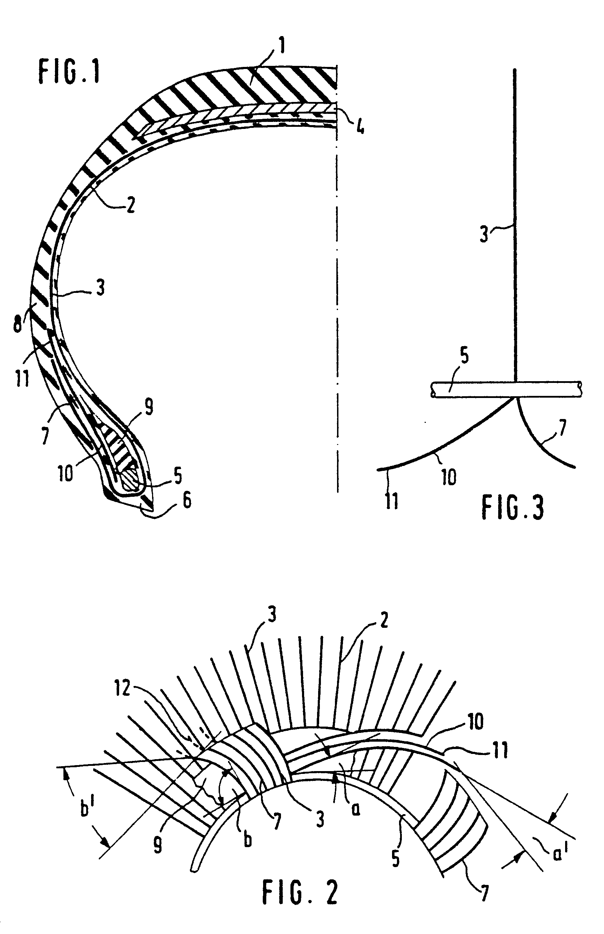

Von besonderer Bedeutung ist der Fadenverlauf der Endabschnitte 7 und der Wulstverstärker 10. Dieser Verlauf ist besonders deutlich aus den Fig. 2 und 3 erkennbar. Die Festigkeitsträger 3 der Endabschnitte 7 weisen dabei in die eine Schrägrichtung, während die Fäden 11 der Wulstverstärker 10 entgegengesetzt schräg angeordnet sind jedoch mit der Maßgabe, daß die Festigkeitsträger 3 geringfügig steiler in bezug auf die Radialrichtung ansteigen im Vergleich zu den insgesamt flacher verlaufenden Fäden 11. Darüber hinaus sind die Fäden 11 und die Festigkeitsträger 3 in den Endabschnitten 7 bogenförmig gestaltet mit der Maßgabe, daß die Fadenwinkel - Winkel b für die Festigkeitsträger 3 und Winkel a für die Fäden 11 - allmählich radial von innen nach außen gesehen kleiner werden. Der Winkel a verringert sich dabei von etwa 18° auf den Wert a' von etwa 14° während der Winkel b mit 90° beginnend in einen kleineren Winkel von b' von 50° übergeht. Somit entsteht ein unsymmetrischer Kreuzverband mit steilerem Anstieg der Festigkeitsträger 3 und einem flacheren Anstieg der Fäden 11 in bezug auf die Umfangsrichtung des Reifenkörpers.

Auf der dem Gummiprofil 9 gegenüberliegenden Seite befindet sich der ununterbrochen von einem Wulstkern 5 zum anderen Wulstkern 5 geführte Abschnitt der Radialkarkasse 2 mit den Festigkeitsträgern 3.

Dabei ist auch im Wulstbereich der Radialverlauf dieser Festigkeitsträger gegeben.

Betrachtet man somit alle Verstärkungseinlagen eines Reifenfußes von einer Seite her, so ergibt sich ein Dreiecksverband, wobei allerdings die zugvorgespannten Karkaßfestigkeitsträger 3 innen am Reifen radial verlaufend angeordnet sind.

Die sich ändernden Winkel der Endabschnitte 7 und der Fäden 11 im vorgenannten Sinne führen zu einer wünschenswerten Umfangserstreckung der Reifenwulstpartien, darüber hinaus aber nicht zu einer wesentlichen Versteifung bei Ausbauchungen oder Ausbiegungen der Reifenseitenwände 8.

Für den Fall, daß die Festigkeitsträger 3 der Endbereiche 7 die freien Enden der Fäden 11 radial nach außen überragen sollten, können auch abgebogene Endteile 12 vorgesehen sein, die Abbiegungen zur radialen Richtung des Reifens hin darstellen. Dieser Verlauf ist jedoch nur für den vorgenannten Sonderfall vergleichsweise langer Endabschnitte 7 vorgesehen.

**Patentansprüche**

1. Fahrzeugluftreifen mit einem zugfesten Gürtel (4) und einer Radialkarkasse (2), deren Festigkeitsträger durch Umschlingen der Reifenkerne (5) in den Reifenwülsten (6) verankert sind, wobei sich seitlich außen im Wulstbereich radial nach außen geführte Endabschnitte (7) der Karkaßlagen befinden und weiterhin Wulstverstärker (10) aus in Cordlage angeordneten Fäden (11) oder dergl. vorgesehen sind, die die Festigkeitsträger (3) der Endabschnitte (7) kreutzen und schräg in bezug auf die durch die Reifenachse bestimmten Radialebenen verlaufen und im Bereich ihrer radial äußeren Enden im Vergleich zu ihren Abschnitten im Wulstkernbereich mit der Reifenumfangsrichtung kleinere Winkel bilden, dadurch gekennzeichnet, daß die Festigkeitsträger (3) der Endabschnitte (7) der Karkaßlagen entgegengesetzt schräg zu den Fäden (11) od. dergl. der Wulstverstärker (10) verlaufen und ebenso wie letztere im Bereich ihrer radial äußeren Enden im Vergleich zu ihren Abschnitten im Wulstkernbereich mit der Reifenumfangsrichtung kleinere Winkel bilden.

2. Fahrzeugluftreifen nach Anspruch 1, dadurch gekennzeichnet, daß die Festigkeitsträger (3) der Radialkarkasse (2) in ihren ununterbrochen von Wulst (6) zu Wulst geführten Abschnitten in bekannter Weise auch im Wulstbereich einen radialen Anstieg aufweisen.

3. Fahrzeugluftreifen nach Anspruch 1, dadurch gekennzeichnet, daß die Wulstverstärker (10) von den seitlich außen gelegenen Endabschnitten (7) der Karkaßlagen zumindest über den größten Teil ihrer Breite hinweg überdeckt sind.

4. Fahrzeugluftreifen nach Anspruch 1, dadurch gekennzeichnet, daß die Festigkeitsträger (3) der Endabschnitte (7) im Wulstkernbereich einen Winkel (b) von etwa 90° mit der Umfangsrichtung und am freien Ende einen Winkel (b') von etwa 50° mit der Reifenumfangsrichtung einschließen.

5. Fahrzeugluftreifen nach Anspruch 1, dadurch gekennzeichnet, daß die Fäden (11) der Wulstverstärker (10) am radial innenliegenden Rand Winkel (a) von etwa 18° und am radial äußeren Umfang Winkel (a') von etwa 14° mit der Reifenumfangsrichtung einschließen.

6. Fahrzeugluftreifen nach Anspruch 1, dadurch gekennzeichnet, daß bei Festigkeitsträgern (3) der Endabschnitte (7), die die Wulstverstärker (10) radial überragen, in diesem die Wulstverstärker überragenden Abschnitt (12) zur radialen Richtung hin abgebogen sind.

7. Fahrzeugluftreifen nach Anspruch 1, dadurch gekennzeichnet, daß die Endbereiche (7) der Karkaßlagen und die Wulstverstärker (10) unmittelbar einander benachbart liegen, jedoch über den größten Teil ihrer radialen Erstreckung durch einen in bekannter Weise im Querschnitt dreieckförmigen Gummistreifen (9) von dem radialverlaufenden, ununterbrochen von einem Wulst (6) zum anderen Wulst (6) geführten Abschnitt der Festigkeitsträger (3) der Radialkarkasse (2) getrennt sind.

## Claims

1. Pneumatic tyre for a vehicle, having a substantially inextensible belt (4) and a radial carcase (2), the reinforcing members of which are secured in the tyre beads (6) by being looped around the tyre cores (5), radially outwardly extending end portions (7) of the carcase plies being disposed laterally externally in the bead region and, in addition, bead reinforcements (10) being provided which are formed from filaments (11) or the like disposed in a cord ply, the filaments crossing the reinforcing members (3) of the end portions (7) and extending diagonally in relation to the radial planes defined by the tyre axis, and the filaments form smaller angles with the circumferential direction of the tyre in the region of their radially outer ends in comparison with their portions in the bead core region, characterised in that the reinforcing members (3) of the end portions (7) of the carcase plies extend in a diagonally opposite manner relative to the filaments (11) or the like of the bead reinforcements (10) and, in exactly the same way as the latter, they form smaller angles with the circumferential direction of the tyre in the region of their radially outer ends in comparison with their portions in the bead core region.

2. Pneumatic tyre for a vehicle according to claim 1, characterised in that the reinforcing members (3) of the radial carcase (2), in their portions which extend continuously from bead (6) to bead, also have in the bead region a radial upwardly sloping portion in known manner.

3. Pneumatic tyre for a vehicle according to claim 1, characterised in that the bead reinforcements (10) are covered by the laterally and externally disposed end portions (7) of the carcase plies, at least over most of their width.

4. Pneumatic tyre for a vehicle according to claim 1, characterised in that the reinforcing members (3) of the end portions (7) subtend, in the bead core region, an angle $b$ of approximately 90° with the circumferential direction and, at the free end, an angle $b'$ of approximately 50° with the circumferential direction of the tyre.

5. Pneumatic tyre for a vehicle according to claim 1, characterised in that the filaments (11) of the bead reinforcements (10) subtend, at the radially internal edge, angles $a$ of approximately 18° and, at the radially outer circumference, angles $a'$ of approximately 14° with the circumferential direction of the tyre.

6. Pneumatic tyre for a vehicle according to claim 1, characterised in that the reinforcing members (3) of the end portions (7), which protrude radially beyond the bead reinforcements (10), are bent towards the radial direction in this portion (12) which protrudes beyond the bead reinforcements.

7. Pneumatic tyre for a vehicle according to claim 1, characterised in that the end portions (7) of the carcase plies and the bead reinforcements (10) lie directly adjacent one another but, over the largest portion they are separated from the radially extending portion of the reinforcing members (3) of the radial carcase (2), which portion extends continuously from one bead (6) to the other bead (6), by means of a rubber strip (9) which has a triangular cross-section in known manner.

## Revendications

1. Pneumatique pour véhicules comportant une ceinture (4) résistant à la traction et une carcasse radiale (2), dont les supports résistants sont accrochés par enroulement autour des armatures (5) des talons (6) du pneumatique et dans lequel il est prévu latéralement à l'extérieur dans les zones de talons des parties terminales (7) des couches de carcasse orientées radialement vers l'extérieur et en outre des éléments de renforcement (10) de talons constitués de fils (11) ou analogues disposés dans les couches de câbles, qui croisent les supports résistants (3) des parties terminales (7) qui sont orientés en oblique par rapport aux plans radiaux définis par l'axe du pneumatique et qui, dans la zone de leurs extrémités radialement extérieures, font avec la direction périphérique du pneumatique un angle plus petit que celui de leurs parties situées dans les zones d'armatures de talons, caractérisé en ce que les éléments résistants (3) des parties terminales (7) des couches de la carcasse sont inclinés dans des directions opposées aux fils (11), ou analogues, des renforts de talons (10) et, de même que ces derniers, ils font avec la direction périphérique du pneumatique un angle plus petit dans la zone de leurs extrémités radialement extérieures que leurs parties situées dans la zone des armatures de talons.

2. Pneumatique pour véhicules selon la revendication 1, caractérisé en ce que les éléments résistants (3) de la carcasse radiale (2) comportent d'une manière connue, dans leurs zones ininterrompues s'étendant d'un talon (6) à l'autre talon, également une orientation radiale vers le haut dans la zone du talon.

3. Pneumatique pour véhicules selon la revendication 1, caractérisé en ce que les renforts de talon (10) sont recouverts, au moins sur la majeure partie de leur largeur, par les parties terminales (7) des couches de carcasse qui sont placées latéralement à l'extérieur.

4. Pneumatique pour véhicules selon la revendication 1, caractérisé en ce que les éléments résistants (3) des parties terminales (7) font, dans la zone des armatures de talon, un angle b d'environ 90° avec la direction périphérique et, à l'extrémité libre, un angle b' d'environ 50°, avec la direction périphérique du pneumatique.

5. Pneumatique pour véhicules selon la revendication 1, caractérisé en ce que les fils (11) des renforts de talon (10) font, sur leur bord situé radialement à l'intérieur, un angle a d'environ 18°, et sur leur bord radialement extérieur, un angle a' d'environ 14°, avec la direction périphérique du pneumatique.

6. Pneumatique pour véhicules selon la revendication 1, caractérisé en ce que, les éléments résistants (3) des zones terminales (7) qui dépassent radialement du renfort de talon (10) sont incurvés par rapport à une direction radiale dans leur partie (12) dépassant du renfort de talon.

7. Pneumatique pour véhicules selon la revendication 1, caractérisé en ce que, les zones terminales (7) des couches de carcasse et les renforts de talon (10) sont placés dans des positions directement adjacentes mais cependant, sur la majeure partie de leur dimension radiale, ils sont séparés, au moyen d'une bande de caoutchouc (9) ayant en section droite une forme triangulaire connue, de la partie des éléments résistants (3) de la carcasse radiale (2) qui sont orientés radialement et qui s'étendent de façon ininterrompue d'un talon (6) jusqu'à l'autre talon (6).

0 122 435

FIG.1

FIG.3

FIG. 2

1